(19)

Europäisches Patentamt
European Patent Office
Office européen des brevets

(11) **EP 2 541 205 A1**

(12) **EUROPEAN PATENT APPLICATION**

(43) Date of publication:
**02.01.2013 Bulletin 2013/01**

(51) Int Cl.:
***G01C 21/36*** *(2006.01)*

(21) Application number: **11005301.4**

(22) Date of filing: **29.06.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Harman Becker Automotive Systems GmbH**
**76307 Karlsbad (DE)**

(72) Inventors:
• **RÖßGER, Peter, Dr. Ing.**
**72631 Aichtal (DE)**
• **HÜNIG, Daniel**
**72074 Tübingen (DE)**

(74) Representative: **Koch Müller**
**Patentanwaltsgesellschaft mbH**
**Maaßstraße 32/1**
**69123 Heidelberg (DE)**

(54) **Navigation system and method for route guidance in a navigation system**

(57) A navigation system and a method for route guidance in a navigation system,
- wherein a first route (100) is calculated,
- wherein a first characteristic value ($r_1$) is calculated based on the first route (100),
- wherein the first route (100) is calculated with a maneuver point (10, 30) involving a movement from a first direction (a) to a second direction (b) along the first route (100),
- wherein a second route (210, 230) is calculated at the maneuver point (10, 30) based on a deviation from the first route (100),
- wherein a second characteristic value ($r_2$) is calculated on the basis of the second route (210, 230),
characterized in that
- a change value (d) is calculated at least based on the second characteristic value ($r_2$),
- the change value (d) is compared with a first threshold (th, $th_1$),
- a first item (111, 131) of maneuver information and a second item (112, 132) of maneuver information are assignable to the maneuver point (10, 30), the first item (111, 131) of maneuver information and the second item (112, 132) of maneuver information being different from each other,
- the first item (111, 131) of maneuver information is output when the change value (d) drops below the first threshold (th, $th_1$), and
- the second item (112, 132) of maneuver information is output when the change value (d) exceeds the first threshold (th, $th_1$).

FIG. 2

**Description**

The present invention relates to a navigation system and a method for route guidance in a navigation system.

Navigation systems have become known in the art as computer-based systems which are mounted in a vehicle or on a bicycle for calculating a driving route to a final destination input by the driver and outputting driving indications for guiding the driver to the desired destination. The driving indications are also referred to as maneuver information.

The driving indications include announcements and instructions relating to forthcoming driving maneuvers which have to be performed by the driver in order to follow the calculated driving route. They are determined by the navigation system in dependence on the calculated driving route (i.e. crossings, junctions and the like) and output to the driver, e.g. by an audio-response unit for voice output of the navigation system.

More specifically, once a driving route to a final destination has been calculated, the navigation system determines the driving maneuvers which have to be performed by the driver at different maneuver points (locations) along the route for following the calculated driving route from the starting point to the final destination.

Subsequently, when the vehicle, which is traveling along the calculated driving route, approaches the point of the route where a driving maneuver has to be performed, different driving indications relating to the forthcoming driving maneuver are output sequentially to the driver in dependence on the distance to the respective point of the route.

As to the content of such driving indications, they may comprise different announcements of the forthcoming maneuver. For example, at first, a general announcement such as "turn off to the right coming soon" at a rather long distance of 400 - 700m may be output, followed by an advance announcement of the imminent maneuver including the distance to the maneuver, such as "turn off to the right after 100 meters", and, finally, in the immediate vicinity of the point of the maneuver, the instruction to perform the driving maneuver such as "now turn off to the right". For the same maneuver (e.g. left turn), the instructions usually have the same announcements. Particularly in densely populated areas where there is a high road density, this generates a large number of announcements which may confuse or disturb the driver.

It occurs that the driver does not comply with the instructions output by the navigation system, what - in the worst case - may lead to a significant deviation between the position of the vehicle and the calculated route which should be followed by the driver, i.e., to wrong-way-driving. In such a case, if the vehicle leaves the calculated driving route and wrong-way-driving, i.e., a predetermined significant positional deviation between the set position of the vehicle according to the predetermined driving route and the actual position of the vehicle, is determined by the navigation system by comparison of the actual position of the vehicle and the calculated driving route, a modified driving route is calculated by the navigation system.

As an example, EP 0 833 291 B1 describes details relating to a method for "re-searching" the driving route when the vehicle is out of the calculated route. Such a method may include a search for an entire new route to the final destination from the current position of the vehicle, or, alternatively, the calculation of an additional route for returning to the original driving route calculated previously.

In both cases, the driver is provided with additional driving indications as to the additional maneuvers that have to be performed according to the newly calculated modified driving route. Nevertheless, in any case a modified driving route means a detour as compared to the original route what, of course, should be avoided.

The EP 1 544 829 A1 describes a navigation system having a function of alerting the driver to potential wrong way driving. The navigation system comprises means for determining a position of a vehicle, means for calculating a driving route of the vehicle, means for determining a driving maneuver in accordance with the predetermined driving route, means for outputting indications relating to the determined driving maneuver to a driver of the vehicle. Additionally, the navigation system has means for alerting the driver to potential wrong way driving including means for detecting a potential wrong way driving situation and means for outputting an indication relating to the potential wrong way driving situation to the driver.

The EP 2 068 121 B1 describes a navigation system including a route guidance function. The navigation system has a route processing unit adapted for calculating a first route to a destination having a characteristic value. The navigation system provides information to the user regarding the first route, thereby determining at least one maneuver point at which the user Is required to make a maneuver from a movement in a first direction to a movement in a second direction. The route is calculated, for example, in such a way that the characteristic value is minimized. The characteristic value is a distance to the destination.

The EP 2 068 121 B1 describes a deceleration calculating unit adapted for receiving information regarding the maneuver point, and which is adapted for calculating a deceleration value which is currently required for the user to make the maneuver. The deceleration calculating unit is adapted for determining whether the deceleration value exceeds a predetermined reference value. The route processing unit is adapted for calculating a second route to the destination as an alternative to the first route, wherein according to the second route the user is not required at the maneuver point to make the maneuver. The route processing unit is adapted for providing information to the user regarding the second route in the event that the deceleration value exceeds the predetermined reference value.

The object of the invention is to improve as much as possible the quality of maneuver information output.

This object is achieved by a method having the features of the independent claim 1. Advantageous refinements are the subject matter of dependent claims and included in the description.

Therefore, a method for route guidance in a navigation system is provided. In the method, a first route is calculated from a starting point, for example the current position of a vehicle, to a destination position. A first characteristic value associated with the first route is calculated on the basis of the first route. The first characteristic value defines at least one characteristic of the first route, for example a route length, travel time to the destination point or fuel consumption up to the destination point.

The first route is calculated with the aid of at least one maneuver point. The maneuver point defines a movement from a first direction to a second direction along the first route. For example, the maneuver point defines a right turn or left turn, a move to the right lane or move to the left lane. A large number of maneuver points are usually calculated for the first route.

In the method, a second route is calculated on the basis of a deviation from the first route at least at one maneuver point. The second route is therefore an alternative route to the first route, starting at the maneuver point. A second characteristic value is calculated on the basis of the second route. The second characteristic value defines at least one characteristic of the second route in a manner accordant to the characteristic of the first route.

In the method, a change value is calculated at least on the basis of the second characteristic value. It is also possible to calculate the change value on the basis of the first characteristic value and the second characteristic value. The change value defines the change in the second characteristic value in relation to the first characteristic value. The characteristic of the second route in relation to the characteristic of the first route is thus quantifiable on the basis of the change value.

In the method, the change value is compared with a first threshold. The first threshold is, for example, a fixed threshold value. Alternatively, the first threshold is calculated on the basis of the first characteristic value.

In the method, a first item of maneuver information and a second item of maneuver information are assignable to the at least one maneuver point. The first item of maneuver information and the second item of maneuver information are different from each other. For example, the first item of maneuver information and the second item of maneuver information have different announcement texts, different Intonations, different volumes, different visual effects and/or different haptic effects.

In the method, the first item of maneuver information is output when the change value drops below the first threshold. Conversely, the second item of maneuver information Is output in the method when the change value exceeds the first threshold.

Using the first item and the second item of maneuver information, a plurality of advantages are achieved. First critical and very important maneuver information gain drivers attention using the first item of maneuver information, even if the driver is distracted by other issues like a telephone call or a conversation. Second the driver is not irritated by maneuver information concerning uncritical maneuvers. Hence the driver can mute the second item of maneuver information concerning uncritical maneuvers, but still the driver's attention is captured using the first item for critical maneuvers.

The aforementioned object is achieved by the navigation system having the features of independent Claim 8. Advantageous refinements are included in the description.

Accordingly, a navigation system is provided which is connected, for example, in a motor vehicle.

The navigation system includes a memory which has stored geographic data. The memory is, in particular, a nonvolatile memory, for example a hard drive, a semiconductor memory (e.g., a flash memory), a disk or the like, or a volatile memory in which the geographic data is temporarily stored.

The navigation system also has an arithmetic unit. The arithmetic unit is, for example, a digital processor or a microcontroller. The arithmetic unit is configured to calculate a first route with a maneuver point on the basis of the geographic data.

The navigation system has a unit for determining the current position. For example, the current position is determined within the first route. The unit for determining the current position is, for example, a GPS satellite receiver.

The navigation system has a unit for audio and/or visual output of maneuver information. The maneuver information may be output in a specifiable distance of the current position to the maneuver point, the output preferably being controllable by the arithmetic unit.

The arithmetic unit of the navigation system is configured to calculate a second route from the geographic data on the basis of a deviation from the first route at the maneuver point of the first route.

The arithmetic unit of the navigation system is configured to calculate a second characteristic value on the basis of the second route.

The arithmetic unit of the navigation system is configured to calculate a change value at least on the basis of the second characteristic value and, if necessary, additionally on the basis of the first characteristic value and to compare the change value with a first threshold. For example, the change value is the difference between the second characteristic value and the first characteristic value. The first threshold is preferably set by the user, for example, on the basis of default values.

The arithmetic unit is preferably configured to assign a first item of maneuver information and a second item of maneuver information to the at least one maneuver point. The first item of maneuver information and the second item of maneuver information are different from each other.

The arithmetic unit of the navigation system is configured to control an output of the first item of maneuver information when the change value drops below the first threshold. The arithmetic unit of the navigation system is configured to control an output of the second item of maneuver information when the change value exceeds the first threshold. The first item of maneuver information or the second item of maneuver information Is therefore output on the basis of a result of the comparison. In addition, the control operation may be dependent on a further condition. For example, the output takes place if the current position of the navigation system has reached a presettable distance from the maneuver point.

The refinements described below relate to both the method and the navigation system. Features of the method constitute functional features of the navigation system. Features of the method may be derived from functions of the navigation system.

According to an advantageous refinement variant, the change value is compared with a second threshold. The second item of maneuver information is output when the change value exceeds the first threshold and also when the change value furthermore drops below the second threshold. Conversely, a third item of maneuver information is output when the change value exceeds the second threshold. The second item of maneuver information and the third item of maneuver information are different from each other. For example, the second item of maneuver information and the third item of maneuver information have different warning signals.

In another refinement, the first item of maneuver information has no audio signal or it has a first audio signal. The first audio signal is output at a first volume. The second item of maneuver information has a second audio signal. The second audio signal is output at a second volume. To output the first audio signal or the second audio signal, the navigation system preferably has a connection to a speaker.

According to an advantageous embodiment, the first volume is lower than the second volume. For example, the first volume is muted.

In another refinement variant, it is provided that the first audio signal and the second audio signal have different spoken words and thus different texts.

The first characteristic value and the second characteristic value are preferably a distance to a destination point or a travel time to a destination point or a fuel consumption up to a destination point or a value which is derived from the distance and/or the travel time and/or the fuel consumption.

According to an advantageous embodiment, the first route and the second route are based on an input of a limiting condition. The limiting condition may be input by the user as an operator input in order to optimize the first route and the second route with regard to distance or travel time or fuel consumption or toll charges or scenic roads. The first characteristic value and the second characteristic value are then also associated with the limiting condition.

The refinement variants described above are particularly advantageous individually as well as in combination. All refinement variants may be combined with each other. Some possible combinations are explained in the description of the exemplary embodiments in the figures. However, these possibilities illustrated therein for combining the refinement variants are not limited.

The invention is explained in greater detail below on the basis of exemplary embodiments illustrated in the drawings.

**Figure 1**     shows a schematic street map having an illustrated route and maneuver points;

Figure 2     shows a schematic flow chart; and

Figure 3     shows a schematic block diagram of a navigation system.

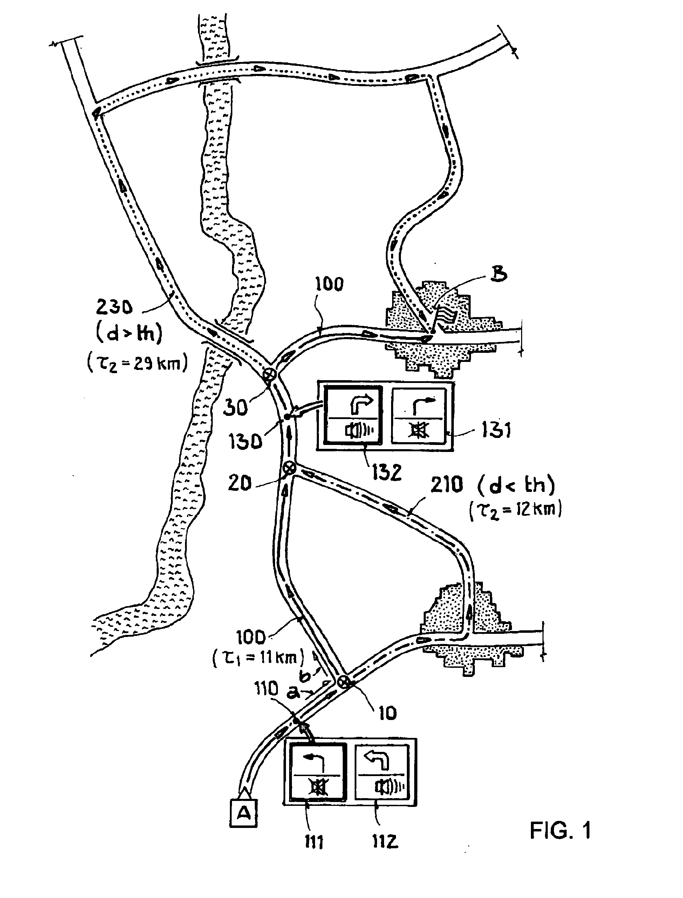

Figure 1 shows a highly simplified representation of a schematic road map. In the exemplary embodiment in Figure 1, a first route 100 is calculated between a starting point A, for example the current position of the motor vehicle, and a destination point B. First route 100 is calculated on the basis of at least one limiting condition. A limiting conditions of this type may be permanently specified, for example. The limiting condition is advantageously specified by the user (driver/passenger). The limiting condition is, for example "shortest distance" or "shortest travel time" or "minimum fuel consumption" or "toll-free roads" or "only scenic roads" or "with points of interest (POI)" or a combination thereof. In the exemplary embodiment in Figure 1, the limiting condition "shortest distance" was entered by the user. First route 100 is calculated on the basis of this limiting condition. The route may be dynamically calculated so that first route 100 Is recalculated during the trip. A recalculation Is initiated, for example, if the driver deviates from first route 100 and takes a detour via a filling station, for instance. Another reason may be, for example, a traffic jam or the blocking of a road.

In the exemplary embodiment in Figure 1, a first characteristic value $r_1$ is calculated on the basis of first route 100. First characteristic value $r_1$ is advantageously also based on the limiting condition. In the exemplary embodiment in Figure 1, first characteristic value $r_1$ is calculated together with first route 100. For example, a value, such as a distance value, is assigned to each road segment of first route 100. First characteristic value $r_1$ is calculated from all values of the road segments of first route 100, for example by adding the values. First characteristic value $r_1$ may also be referred to as costs. In the exemplary embodiment in Figure 1, first characteristic value $r_1$ is the distance between current position A and destination position B. In the exemplary embodiment in Figure 1, first characteristic value $r_1$ = 11 km.

In the exemplary embodiment in Figure 1, first route 100 is calculated with a first maneuver point 10 and a second maneuver point 20 and a third maneuver point 30. In the example of first maneuver point 10, a movement from a first direction a to a second direction b along first route 100 is carried out by the driver turning left at first maneuver point 10. For first maneuver point 10, an instruction to the driver could be, for example: "turn left."

At second maneuver point 20, the first direction and the second direction are the same. An instruction to the driver may therefore be, for example: "continue straight ahead." Often, if no change in travel direction would be necessary for the maneuver, a maneuver instruction is not output, which Is also the case at maneuver point 20 in the exemplary embodiment in Figure 1.

In the example of third maneuver point 30, the driver is to turn right. For third maneuver point 30, an instruction to the driver could be, for example: "turn right."

In the exemplary embodiment in Figure 1, a second route 210 is calculated at first maneuver point 10 for first maneuver point 10 on the basis of a deviation from first route 100. A deviation from first route 100 takes place, for example, if the driver missed the left turn at first maneuver point 10 and continued driving straight ahead. Second route 210 is identical to the route guidance of first route 100 from second maneuver point 20 up to destination point B.

A second characteristic value $r_2$ is calculated on the basis of second route 210. In the exemplary embodiment in Figure 1, second characteristic value $r_2$ = 12 km for second route 210, so that the distance of second route 210 is 1 km longer than the distance of first route 100.

In the exemplary embodiment in Figure 1, a change value d is calculated on the basis of first characteristic value $r_1$ and second characteristic value $r_2$. For example, a function is used for the calculation, change value d being the function value of the function and first characteristic value $r_1$ and second characteristic value $r_2$ being the arguments of the function. For example, d is formed by the difference formation of or ratio between $r_2$ and $r_1$. In the exemplary embodiment in Figure 1, change value d is determined for second route 210 by means of

$$d = \frac{r_2}{r_1} = \frac{12 \text{ km}}{11 \text{ km}} \approx 1.091 \qquad (1)$$

Change value d is also compared with a first threshold th, for example by carrying out a greater than/less than comparison. In the exemplary embodiment in Figure 1, threshold th is set to a fixed value of th = 1.1. In the exemplary embodiment, change value d has dropped below threshold value th. Only values greater than 1.1 cause the threshold to be exceeded In the exemplary embodiment in Figure 1.

A first item 111 of maneuver information and a second item 112 of maneuver information are assignable to first maneuver point 10. Depending on the requirements, first item 111 of maneuver information and/or second item 112 of maneuver information are thus each assigned to first maneuver point 10. First item 111 of maneuver information and second item 112 of maneuver information are different from each other. In the exemplary embodiment in Figure 1, first item 111 of maneuver information has an optical display with a left-pointing arrow for the maneuver "turn left." On the other hand, the audio output is muted. Second item 112 of maneuver information has a much larger left-pointing arrow, which is displayed, for example, in the same size as the display and, for example, flashes or has another visual alternating signal. In addition, second item 112 of maneuver information differs from first item 111 of maneuver information in that an audio signal having acoustic information on the maneuver "turn left" is output. First item 111 of maneuver information and second item 112 of maneuver information may differ from each other in terms of text, intonation, volume, visual effect and/or haptic effect, depending on the embodiment.

In the exemplary embodiment in Figure 1, the vehicle reaches, for example, point 110, which is defined at a presettable distance to first maneuver point 10. First item 111 of maneuver information or second Item 112 of maneuver information is now output at point 110. First item 111 of maneuver information is output if change value d drops below first threshold th. On the other hand, first item 112 of maneuver information is output if change value d exceeds first threshold th. In the exemplary embodiment in Figure 1, change value d, which is approximately 1,091, drops below the threshold, which is th = 1.1 (d < th). First item 111 of maneuver information, which is assigned to first maneuver point 10, is thus output at first maneuver point 10. This is indicated in Figure 1 by the bold line around first item 111 of maneuver information.

If the driver follows first route 100 to point 130, a first or second item 131, 132 of maneuver information assigned to third maneuver point 30 Is output. Change value d is again compared with threshold th. This takes place at the third maneuver point 30 for (further) second route 30, having a significant detour via two river bridges. Second characteristic value $r_2$, which is $r_2$ = 29 km, is determined from geographic data. Change value d is calculated at third maneuver point 30 by means of

$$ d \approx \frac{r_2}{r_1} = \frac{29 \text{ km}}{11 \text{ km}} \approx 2.636 \tag{2} $$

Change value d is thus greater than threshold th (d > th), and the second item 132 of maneuver information is output using a highlighted optical display and acoustic output. The output is schematically indicated in Figure 1 by the bold line around the second item 132 of maneuver information. For example, the detour on second route 230 of e.g. 25 km resulting from a deviation from the first route 100, Is output as a warning in the acoustic output or the optical display.

According to advantages of the embodiment of Fig. 1 the navigation system has voice outputs, that inform the driver on the next driving maneuver if necessary. Depending on the criticality of the maneuver style (e.g. the significant detour caused), volume or any other parameter of maneuver information changes. The exemplary embodiment In Figure 1 achieves the advantage that the output of the maneuver information is prefiltered according to significance. Thus, the driver's attention is attracted by the output of second item 112 of maneuver information only if a deviation from the first route 100 is particularly critical, for example if a particularly significant detour is induced. On the other hand, the driver is supplied with much less information if multiple nearly equivalent options exist and the current maneuver is therefore not critical. This may help substantially relieve the burden on the driver and thus substantially reduce driver stress, In particular in dense urban traffic having a large number of maneuvers.

In another embodiment of the invention not shown in Fig. 1 texts with different lengths are used. An uncritical maneuver message is announced with the text: "Please turn left at the next junction", when the user approaches a maneuver point. Depending on a significant detour otherwise a medium critical announcement may be output approaching another maneuver point: "You should really turn right at the next junction." A very critical maneuver, for example defined by a detour of more than 10 km or a heavy traffic jam on the route, could be announced: "You should definitely turn right next junction, or you will have a detour of 15.3 km, otherwise." The changes in criticality In this embodiment may also correlate with the volume of the announcement, or with different alarm tones implemented.

In another embodiment of the invention a critical or very critical message is passed through, although the navigation system is muted for audio messages. Additionally, the message text could be modified by other parameters. For example, if the driver sets the Indicator to the left, the announcement may be: "Turn right at the next junction, not left."

In yet another embodiment, change value d is determined exclusively on the basis of second characteristic value $r_2$. In this case change value d, for example, is equal to second characteristic value $r_2$. The following thus applies to change value d

$$ d = r_2 \tag{3} $$

In this case, threshold th may be calculated as

$$ th = r_1 \cdot 1.1 \tag{4} $$

If second characteristic value $r_2$ exceeds first characteristic value $r_1$ in this exemplary embodiment by more than 10%, threshold th is exceeded; otherwise the threshold is undershot.

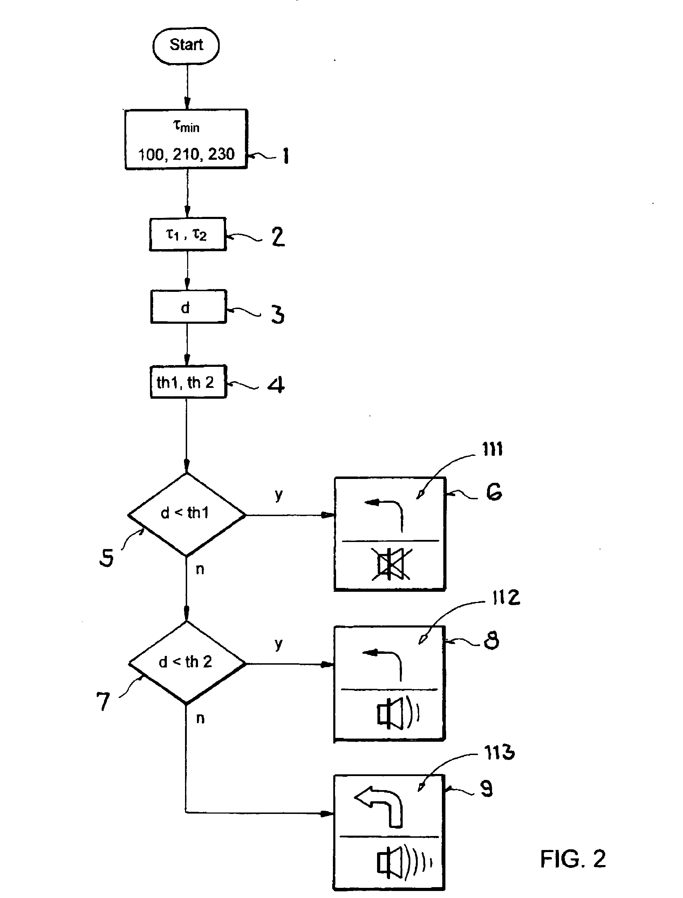

**Figure 2** shows a schematic flow chart of a sequence of method steps.

After the sequence of method steps begins, a limiting condition $r_{min}$ is entered by the user in a first step 1. The limiting condition is, for example, a minimum distance or a minimum travel time or a minimum fuel consumption or no toll roads or primarily scenic roads or a combination thereof, for example on the basis of a weighting. The exemplary sequence of method steps in Figure 2 is explained in greater detail below on the basis of limiting condition $r_{min}$ corresponding to "minimum travel time."

First route 100 and each second route 210, 230 are calculated on the basis of the input of limiting condition $r_{min}$. First characteristic value $r_1$ and second characteristic value $r_2$ are associated with limiting condition $r_{min}$ so that first characteristic value $r_1$ is a first distance $r_1$ of first route 100, and second characteristic value $r_2$ is a second distance $r_2$ of second route 210, 230 in each case. In second step 2, first characteristic value $r_1$ and second characteristic value $r_2$ are dynamically calculated for maneuver point 10, 30. First characteristic value $r_1$ and second characteristic value $r_2$ are in this example a travel time to a destination point.

A change value d, which is derived from a change in the travel time due to second route 210, 230, is determined in third step 3. Change value d is determined, for example, by means of

$$d = r_2(A,B) - r_1(A,B) \qquad (5)$$

where d is the change value, which is compared with threshold $th_1$. $r_2(A,B)$ Is the travel time along second route 210 between current position A and destination position B. $r_1(A,B)$, on the other hand, is the travel time for first route 100 between current position A and destination position B. For example it is possible that the second route is shorter, but due to traffic jam or the road can be closed to traffic so that the travel time along second route 210 is much higher. Here the drivers attention is reached especially in case the second route is well known to the driver to be the appropriate one normally.

In a fourth step 4, a first threshold $th_1$, is determined, for example, by means of

$$th_1 = 5\% \cdot r_1(A,B) \qquad (6)$$

where $th_1$ is the first threshold, $r_1(A, B)$ is the calculated travel time for first route 100, which includes current position A and destination position B.

In the exemplary embodiment in Figure 2, a second threshold $th_2$ is also determined in fourth step 4 by means of

$$th_2 = 10\% \cdot r_1(A,B) \qquad (7)$$

where $th_2$ is the second threshold, $r_1(A, B)$ is the calculated travel time for first route 100, which includes current position A and destination position B.

Change value d is compared with first threshold $th_1$ in fifth step 5. If change value d drops below first threshold $th_1$, first item of maneuver information 111 is output In a sixth step 6. If change value d exceeds first threshold $th_1$ in fifth step 5, a further comparison of change value d with second threshold $th_2$ is carried out in a seventh step 7. If change value d drops below second threshold $th_2$ in seventh step 7, a second item of maneuver information 112 is output in an eighth step 8. If change value d exceeds second threshold $th_2$ in seventh step 7, a third item of maneuver information 113 is output in a ninth step 9.

Therefore, the second item of maneuver information 112 is output only if change value d exceeds first threshold $th_1$ and if change value d drops below second threshold $th_2$ at the same time. Second item of maneuver information 112 and third item of maneuver information 113 are different from each other. For example, second item of maneuver information 112 and third item of maneuver information 113 differ in terms of the volume of the announcement text, or second item of maneuver information 112 and third Item of maneuver information 113 differ in terms of an optical or acoustic warning signal. It is also possible for second item of maneuver information 112 and third item of maneuver information 113 to differ in that, during the acoustic output of third maneuver information 113, all other audio sources (radio, telephone) are muted, while during the acoustic output of second item of maneuver information 122, other audio sources (radio, telephone) are not interrupted.

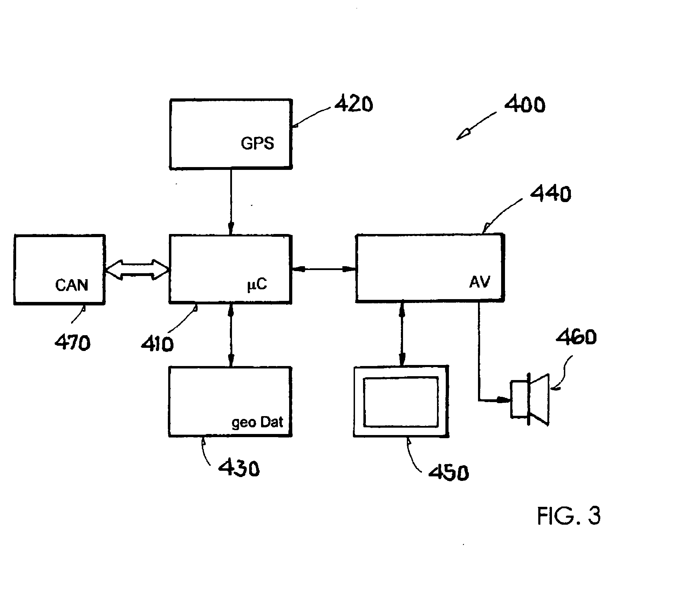

**Figure 3** shows a schematic block diagram of a navigation system 400.

Navigation system 400 includes a memory 430 which has stored geographic data geoDat. Memory 430 is, for example, a hard drive or a semiconductor memory or a disk (CD-ROM/DVD). It is also possible for memory 430 to be designed only as a buffer memory for geographic data geoDat and for geographic data geoDat to be downloaded as needed via a (radio) network.

Navigation system 400 includes an arithmetic unit 410 which is configured to calculate first route 100 with the aid of a maneuver point 10, 30 on the basis of geographic data geoDat. The arithmetic unit is, for example, a CPU or a microcontroller (uC) or a signal processor.

Navigation system 400 includes a unit 420 for determining the current position within route 100. The current position is advantageously determined on the basis of satellite signals (GPS).

Navigation system 400 includes a unit 440 for the audio and/or visual output of maneuver information 111, 112, 131, 132 at a presettable distance from the current position to maneuver point 10, 30. For this purpose, unit 440 for outputting audio and video (AV) is preferably connected to an optical display 450 and/or to a speaker 460. In the exemplary embodiment in Figure 3, the optical display 450 is designed as a touch screen and enables the user to make entries in the navigation system. For example, the user may use the touch screen to enter the limiting condition $r_{min}$ for calculating the first route 100.

In the exemplary embodiment in Figure 3, arithmetic unit 410 is connected to memory 430 and unit 420 for determining the current position and output unit 440 and to a motor vehicle network 470, for example a CAN bus, via interfaces.

Arithmetic unit 410 is configured to calculate a second route 210, 230 from geographic data geoDat on the basis of a deviation from first route 100 at maneuver point 10, 30. This calculation may be carried out dynamically right at the beginning of the trip or during the trip.

Based on second route 210, 230, arithmetic unit 410 is configured to calculate a second characteristic value $r_2$ and a change value d on the basis of first characteristic value $r_1$ and second characteristic value $r_2$. Arithmetic unit 410 is configured to compare change value d with a first threshold th, $th_1$ and to control an output of a first item of maneuver information 111, 131 or a second item of maneuver information 112, 132 as a function of a comparison result of the comparison, first item of maneuver information 111, 131 and second item of maneuver information 112, 132 being different from each other.

The invention is not limited to the embodiment variants illustrated in Figures 1 through 3. For example, it is possible to determine change value d and first/second threshold $th_1$, $th_2$ in a different manner. It is likewise possible to output first Item of maneuver information 111, 131 and second item of maneuver information 112, 132 in a different manner.

List of Reference Numerals

| | |
|---|---|
| 1 through 9 | Method step |
| 10, 20, 30 | Maneuver point |
| 100, 210, 230 | Route |
| 110, 130 | Point on a route |
| 111, 112, 113, 131, 132 | Item of maneuver information |
| 400 | Navigation system |
| 410 | Arithmetic unit |
| 420 | Unit for determining a position |
| 430 | Memory |

| | |
|---|---|
| 440 | Output unit |
| 450 | Touch screen |
| 460 | Speaker |
| 470 | Network connection |
| d | Change value |
| $r_1$, $r_2$ | Characteristic value |
| $r_{min}$ | Limiting condition |
| th, $th_1$, $th_2$ | Threshold |
| CAN | CAN bus |
| GPS | Global Positioning System |
| geoDat | Geographic data |
| AV | Audio/video |

**Claims**

1. A method for route guidance in a navigation system (400),

- wherein a first route (100) is calculated,
- wherein a first characteristic value ($r_1$) is calculated based on the first route (100),
- wherein the first route (100) is calculated with a maneuver point (10, 30) involving a movement from a first direction (a) to a second direction (b) along the first route (100),
- wherein a second route (210, 230) is calculated at the maneuver point (10, 30) based on a deviation from the first route (100),
- wherein a second characteristic value ($r_2$) is calculated on the basis of the second route (210, 230),
**characterized in that**
- a change value (d) is calculated at least based on the second characteristic value ($r_2$),
- the change value (d) is compared with a first threshold (th, $th_1$),
- a first item (111, 131) of maneuver information and a second item (112, 132) of maneuver information are assignable to the maneuver point (10, 30), the first item (111, 131) of maneuver information and the second item (112, 132) of maneuver information being different from each other,
- the first item (111, 131) of maneuver information is output when the change value (d) drops below the first threshold (th, $th_1$), and
- the second item (112, 132) of maneuver information is output when the change value (d) exceeds the first threshold (th, $th_1$).

2. The method according to Claim 1,

- wherein the change value (d) is compared with a second threshold ($th_2$),
- wherein the second item (112) of maneuver Information is output only if the change value (d) exceeds the first threshold (th, $th_1$) and if the change value (d) drops below the second threshold ($th_2$), and
- wherein a third item (113) of maneuver information is output when the change value (d) exceeds the second threshold ($th_2$), whereby the second item (112, 132) of maneuver information and the third item (113) of maneuver information are different from each other.

3. The method according to one of the preceding claims,

- wherein the first item (111) of maneuver information has no audio signal or has a first audio signal which is output at a first volume,
- wherein the second item (112) of maneuver information has a second audio signal which is output at a second volume.

**4.** The method according to Claim 3,

- wherein the first volume being lower than the second volume.

**5.** The method according to one of Claims 3 or 4,

- wherein the first audio signal and the second audio signal having different spoken words.

**6.** The method according to one of the preceding claims,

- wherein the first characteristic value ($r_1$) and the second characteristic value ($r_2$) are

a distance to a destination point
or
a travel time to a destination point
or
a fuel consumption up to a destination point
or
a value which is derived from the distance and/or the travel time and/or the fuel consumption.

**7.** The method according to one of the preceding claims,

- wherein the first route (100) and the second route (210) are calculated based on an Input of a limiting condition ($r_{min}$), and
- the first characteristic value ($r_1$) and the second characteristic value ($r_2$) depending on the limiting condition ($r_{min}$).

**8.** A navigation system (400), comprising

- a memory (430) which has stored geographic data (geoDat),
- an arithmetic unit (410) which is configured to calculate a first route (100) with a maneuver point (10, 30) based on the geographic data (geoDat).
- a unit (420) for determining the current position within the route,
- a unit (440) for the audio and/or visual output of maneuver information (111, 112, 131, 132) at a presettable distance from the current position to the maneuver point (10, 30),
- wherein the arithmetic unit (410) is configured to calculate a second route (210, 230) from the geographic data (geoDat) based on a deviation from the first route (100) at the maneuver point (10, 30),
- wherein the arithmetic unit (410) is configured to calculate a second characteristic value ($r_2$) based on the second route (210, 230),
**characterized in that**
- the arithmetic unit (410) is configured to calculate a change value (d) at least based on the second characteristic value ($r_2$),
- the arithmetic unit (410) is configured to compare the change value (d) with a first threshold (th, $th_1$),
- the arithmetic unit (410) is configured to assign a first item (111, 131) of maneuver information and a second item (112, 132) of maneuver information to the maneuver point (10, 30), the first item (111, 131) of maneuver information and the second item (112, 132) of maneuver information being different from each other,
- the arithmetic unit (410) is configured to control the output the of the first item (111, 131) of maneuver information when the change value (d) drops below the first threshold (th, $th_1$), and
- the arithmetic unit (410) is configured to control the output the of the second item (112, 132) of maneuver information when the change value (d) exceeds the first threshold (th, $th_1$).

230
(d > th)
($\tau_2$ = 29 km)

100

B

30

130

20

131

132

210 (d < th)
($\tau_2$ = 12 km)

100
($\tau_1$ = 11 km)

110

a

b

10

A

111

112

FIG. 1

FIG. 2

FIG. 3

Europäisches
Patentamt

European
Patent Office

Office européen
des brevets

# EUROPEAN SEARCH REPORT

Application Number

EP 11 00 5301

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/153195 A1 (BROADBENT MATT [TW]) 23 June 2011 (2011-06-23) * paragraphs [0010], [0011]; claim 1; figures * ----- | 1,3-8 | INV. G01C21/36 |
| X | EP 0 671 603 A1 (HONDA MOTOR CO LTD [JP]) 13 September 1995 (1995-09-13) * column 4, line 56 - line 58 * * column 5, line 37 - line 47 * * column 6, line 29 - line 32 * * column 7, line 1 - line 6 * * column 7, line 10 - line 15 * * column 7, line 35 - line 45 * * claims 1-4 * ----- | 1-8 | |

TECHNICAL FIELDS
SEARCHED        (IPC)

G01C

The present search report has been drawn up for all claims

| Place of search | Date of completion of the search | Examiner |
|---|---|---|
| The Hague | 13 December 2011 | Hunt, Joke |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 541 205 A1

## ANNEX TO THE EUROPEAN SEARCH REPORT
## ON EUROPEAN PATENT APPLICATION NO.

EP 11 00 5301

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2011

| Patent document cited in search report | | Publication date | Patent family member(s) | | Publication date |
|---|---|---|---|---|---|
| US 2011153195 | A1 | 23-06-2011 | TW 201122433 A<br>US 2011153195 A1 | | 01-07-2011<br>23-06-2011 |
| EP 0671603 | A1 | 13-09-1995 | DE 69509813 D1<br>DE 69509813 T2<br>EP 0671603 A1<br>JP 3488969 B2<br>JP 7248232 A<br>US 5689423 A | | 01-07-1999<br>27-01-2000<br>13-09-1995<br>19-01-2004<br>26-09-1995<br>18-11-1997 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0833291 B1
- EP 1544829 A1

- EP 2068121 B1